# EUROPEAN PATENT APPLICATION

(11) **EP 4 764 490 A1**
(43) Date of publication of application: **24.06.2026**
(21) Application number: 25216852.1
(22) Date of filing: 19.11.2025
(51) Int. Cl.: G01N 30/72, G01N 30/86, H01J 49/00

(54) **SYSTEMS AND METHODS FOR PREDICTING ELUTION TIMES FOR TARGETED MASS SPECTROMETRY**

(30) Priority: 20.12.2024 US 202463736988 P
(71) Applicant: Thermo Finnigan LLC, San Jose, CA 95134 (US); University of Washington, Seattle, WA 98195 (US)
(72) Inventor: Remes, Philip M., San Jose, 95134 (US); Wen, Bo, Seattle (US); MacCoss, Michael J., Seattle (US)
(74) Representative: Boult Wade Tennant LLP

(57) **Abstract**

A system for predicting elution times for targeted mass spectrometry determines elution times for a first set of analytes eluting from a separation system. The system accesses metadata associated with analytes included in a second set of analytes, the second set of analytes including at least one analyte not included in the first set of analytes. The system predicts, based on the metadata associated with the analytes included in the second set of analytes and the elution times for the first set of analytes, elution times for the second set of analytes. The system sets, based on the predicted elution times for the second set of analytes, a targeted acquisition schedule for the second set of analytes. The system directs a mass spectrometer to acquire, based on the targeted acquisition schedule, mass spectra of product ions derived from the second set of analytes.

## Description

### BACKGROUND INFORMATION

A mass spectrometer is a sensitive instrument that may be used to detect, identify, and/or quantify molecules based on the mass-to-charge ratio (m/z) of ions produced from the molecules. A mass spectrometer generally includes an ion source for producing ions from molecules included in a sample, a mass analyzer for separating the ions based on their m/z, and an ion detector for detecting the separated ions. The mass spectrometer may include or be connected to a computer-based software platform that uses data from the ion detector to construct a mass spectrum that shows a relative abundance of each of the detected ions as a function of m/z. The mass spectrum may be used to detect and quantify molecules in simple and complex mixtures. A separation system, such as a liquid chromatograph (LC), gas chromatograph (GC), or capillary electrophoresis (CE) system, may be coupled to the mass spectrometer in a combined system (e.g., LC-MS, GC-MS, or CE-MS system) to separate components in the sample before the components are introduced to the mass spectrometer.

One application of mass spectrometry is the identification, quantification, and structural elucidation of peptides, proteins, and related molecules in complex biological samples. In some such experiments, often referred to as tandem mass spectrometry (MS/MS or MS2) or multi-stage mass spectrometry (MSn where n is 2 or more), certain ions are fragmented in a controlled manner to yield product ions. A mass analysis (referred to as an MS/MS, MS2, or MSn analysis) is then performed on the product ions to generate mass spectra of the product ions. The mass spectra of the product ions provide information that may be used to confirm identification, determine quantity, and/or derive structural details regarding analytes of interest.

Various techniques may be used to acquire mass spectra using tandem mass spectrometry and MSn mass spectrometry. One commonly used technique is data-dependent acquisition (DDA), which uses data acquired in one mass analysis to select, based on predetermined criteria, one or more ion species or a narrow m/z range for mass isolation and fragmentation. For example, the mass spectrometer may perform a full MS survey scan of precursor ions over a wide precursor m/z range and then select one or more precursor ion species from the resulting spectra for subsequent MS/MS or MSn analysis. The criteria for selection of precursor ion species may include intensity, charge state, m/z, inclusion/exclusion lists, or isotopic patterns. The main disadvantage of the DDA technique is the inherently random nature of the results. When technical replicates of the same sample or comparative analysis on other samples is performed, some analytes may be measured in one experiment but not in others. This frustrates attempts to perform reproducible analyses and is known as the "missing value problem".

In contrast to DDA, data-independent acquisition (DIA) is a technique in which all precursor ion species within a wide precursor m/z range (e.g., 500 - 900 m/z) are isolated and fragmented via a sequentially advancing isolation window of a fixed m/z width (e.g., 20 m/z) to generate product ions. An MS2 or MSn analysis is then performed on the product ions in a methodical and unbiased manner. The acquisition of the set of spectra spanning the full precursor m/z range constitutes one cycle, which is repeated to generate MS2 or MSn mass spectra of the product ions. The cycle time, or time required to acquire the spectra in a cycle, is typically set such that at least a certain number of cycles will be executed per chromatography peak width, such that area of the peaks may be properly integrated. In the DIA technique, isolation and fragmentation of one or more precursor ion species is not dependent on data acquired in a survey mass analysis, as in DDA, and is much more suitable for comparing results across different samples than DDA.

In contrast to DDA and DIA, targeted mass spectrometry performs analysis of a fixed list of analytes. Targeted mass spectrometry comes in many forms, such as selected reaction monitoring (SRM), multiple reaction monitoring (MRM), and parallel reaction monitoring (PRM). Generally, the introduction of the sample to the mass spectrometer is performed using a separation system, and to increase experiment capacity the operator schedules analysis of each compound only during a narrow period of time around the characteristic elution times of each analyte of interest. Targeted mass spectrometry is advantageous because of the high data quality (quantitative precision and sensitivity) that can be produced when the instrument is dedicated to the analysis of a smaller group of analytes of interest, each with a narrow or even customized precursor isolation window. Narrow scheduled retention time windows may produce results with low limits of detection and high dynamic range, as well as allow for increasing a number of targets in an assay.

However, using narrow scheduled acquisition windows may be risky due to drifts in elution time throughout an experiment run and over time. Narrow acquisition time windows run the risk of missing a target analyte's elution time. Further, due to elution time drift, the number of targets that may be analyzed in an assay is limited. For example, a wider acquisition window may be used to address the elution time drift, but wide acquisition windows reduce the number of targets that may be analyzed with a sufficient number of acquisitions per chromatography peak width.

### SUMMARY

The following description presents a simplified summary of one or more aspects of the methods and systems described herein to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some illustrative embodiments, a non-transitory computer-readable medium storing instructions that, when executed, direct at least one processor of a computing device for mass spectrometry to perform a process comprising determining elution times for a first set of analytes eluting from a separation system; accessing metadata associated with analytes included in a second set of analytes, the second set of analytes including at least one analyte not included in the first set of analytes; predicting, based on the metadata associated with analytes included in a second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.

In some illustrative embodiments, a system for predicting elution times for targeted mass spectrometry comprises a memory storing instructions and a processor communicatively coupled to the memory and configured to execute the instructions to perform a process comprising: determining elution times for a first set of analytes eluting from a separation system; accessing metadata associated with analytes included in a second set of analytes, the second set of analytes including at least one analyte not included in the first set of analytes; predicting, based on the metadata associated with analytes included in a second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.

In some illustrative embodiments, a system for performing mass spectrometry comprises a mass analyzer configured to acquire, over time, a series of mass spectra of detected ions derived from components eluting from a separation system; and a computing device configured to perform a process comprising: determining elution times for a first set of analytes eluting from a separation system; accessing metadata associated with analytes included in a second set of analytes, the second set of analytes including at least one analyte not included in the first set of analytes; predicting, based on the metadata associated with analytes included in a second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a functional diagram of an illustrative liquid chromatography-mass spectrometry (LC-MS) system.
FIG. 2 shows a functional diagram of an illustrative implementation of mass spectrometer that may be included in the LC-MS system of FIG 1.
FIG. 3 shows a functional diagram of an illustrative mass spectrometry control system that may be used to predict elution times.
FIG. 4 shows an illustrative method of predicting elution times.
FIG. 5 shows an illustrative method of predicting elution times.
FIG. 6 shows an illustrative computing device.

### DETAILED DESCRIPTION

Systems, apparatuses, and methods of predicting elution times for targeted mass spectrometry are described herein. For example, a system for predicting elution times for targeted mass spectrometry is configured to determine elution times for a first set of analytes eluting from a separation system and access metadata associated with analytes included in a second set of analytes, where the second set of analytes includes at least one analyte not included in the first set of analytes. The system is further configured to predict, based on the metadata associated with analytes included in a second set of analytes and the elution times for the first set of analytes, elution times for the second set of analytes and set, based on the predicted elution times for the second set of analytes, a targeted acquisition schedule for the second set of analytes. The system is further configured to direct a mass spectrometer to acquire, based on the targeted acquisition schedule, mass spectra of product ions derived from the second set of analytes.

The systems, apparatuses, and methods described for predicting elution times for targeted mass spectrometry may enable narrowly scheduled windows for analysis of each analyte, which may allow for increased dwell time or injection time per target analyte. This in turn may yield higher precision measurements and/or lower limits of detection for the target analytes. Further, the narrowly scheduled windows may enable experiments that analyze thousands or tens of thousands or more analytes in a sample and/or an experiment. The predicted elution times may also be configured to account for drifts in elution time as an experiment progresses and/or multiple experiments are run on a sample. As described herein, the systems, apparatuses, and methods may predict elution times for target analytes in a sample based on elution times of a different set of analytes in a training sample.

Various embodiments will now be described in more detail with reference to the figures. The systems and methods described herein may provide one or more of the benefits mentioned above and/or various additional and/or alternative benefits that will be made apparent herein.

In some implementations, the methods and systems for performing ion population regulation may be used in conjunction with a combined separation-mass spectrometry system, such as an liquid chromatography-mass spectrometry (LC-MS) system. As such, an LC-MS system will now be described. The described LC-MS system is illustrative and not limiting. The methods and systems described herein may operate as part of or in conjunction with the LC-MS system described herein and/or with any other suitable separation-mass spectrometry system, including a high-performance liquid chromatography-mass spectrometry (HPLC-MS) system, a gas chromatography-mass spectrometry (GC-MS) system, or a capillary electrophoresis-mass spectrometry (CE-MS) system. The methods and systems described herein may also operate in conjunction with any other continuous flow sample source, such as a flow-injection mass spectrometry system (FI-MS) in which analytes are injected into a mobile phase (without separation in a column) and enter the mass spectrometer with time-dependent variations in intensity (e.g., Gaussian-like peaks).

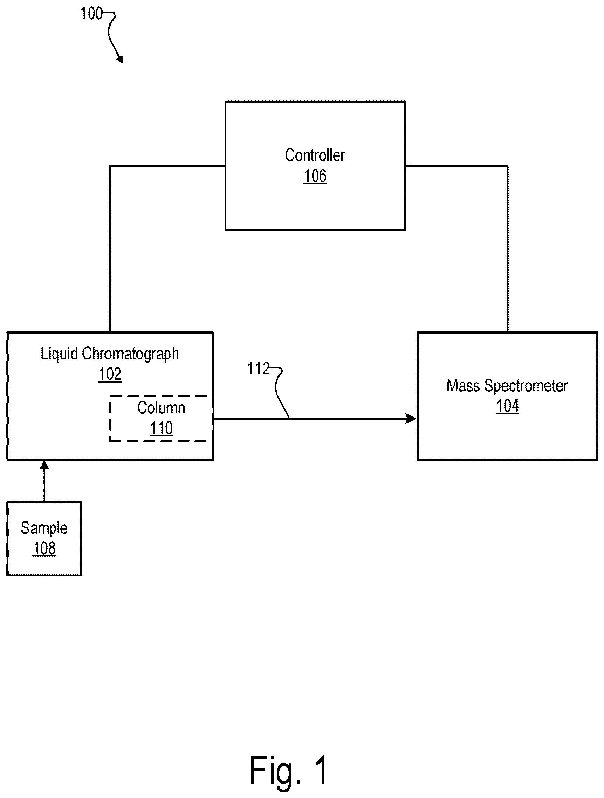

FIG. 1 shows a functional diagram of an illustrative LC-MS system 100. LC-MS system 100 includes a liquid chromatograph 102, a mass spectrometer 104, and a controller 106. Liquid chromatograph 102 is configured to separate, over time, components (e.g., analytes) within a sample 108 that is injected into liquid chromatograph 102. Sample 108 may include, for example, chemical components (e.g., molecules, ions, etc.) and/or biological components (e.g., metabolites, proteins, peptides, lipids, etc.) for detection and analysis by LC-MS system 100. Liquid chromatograph 102 may be implemented by any liquid chromatograph as may suit a particular implementation. In liquid chromatograph 102, sample 108 may be injected into a mobile phase (e.g., a solvent), which carries sample 108 through a column 110 containing a stationary phase (e.g., an adsorbent packing material). As the mobile phase passes through column 110, components within sample 108 elute from column 110 at different times based on, for example, their size, their affinity to the stationary phase, their polarity, and/or their hydrophobicity.

A detector (e.g., an ion detector component of mass spectrometer 104, an ion-electron converter and electron multiplier, etc.) may measure the relative intensity of a signal modulated by each separated component in eluate 112 from column 110. Data generated by the detector may be represented as a chromatogram, which plots retention time on the X-axis and a signal representative of the relative intensity on the Y-axis. The retention time of a component is generally measured as the period of time between injection of sample 108 into the mobile phase and the relative intensity peak maximum after chromatographic separation. In some examples, the relative intensity may be correlated to or representative of relative abundance of the separated components. Data generated by liquid chromatograph 102 may be output to controller 106.

In some cases, particularly in analyses of complex mixtures, multiple different components in sample 108 co-elute from column 110 at approximately the same time, and thus may have the same or similar retention times. As a result, determination of the relative intensity of the individual components within sample 108 requires further separation of signals attributable to the individual components. To this end, liquid chromatograph 102 directs components included in eluate 112 to mass spectrometer 104 for identification and/or quantification of one or more of the components.

Mass spectrometer 104 is configured to produce ions from the components received from liquid chromatograph 102 and sort or separate the produced ions based on a mass-to-charge ratio (m/z) of the ions. Mass spectrometer 104 may be implemented by a multi-stage mass spectrometer configured to perform multi-stage mass spectrometry (denoted MSn where n is 2 or more) or a tandem mass spectrometer configured to perform tandem mass spectrometry (a form of multi-stage mass spectrometry denoted MS/MS or MS2 (where n is 2)). A detector in mass spectrometer 104 measures the intensity of the signal produced by the ions. As used herein, "intensity" or "signal intensity" refers to the response of the detector and may represent absolute abundance, relative abundance, ion count, intensity, relative intensity, ion current, or any other suitable measure of ion detection. Data acquired by mass spectrometer 104 may be output to controller 106. Data generated by the detector may be represented by mass spectra, which plot the intensity of the observed signal as a function of m/z of the detected ions.

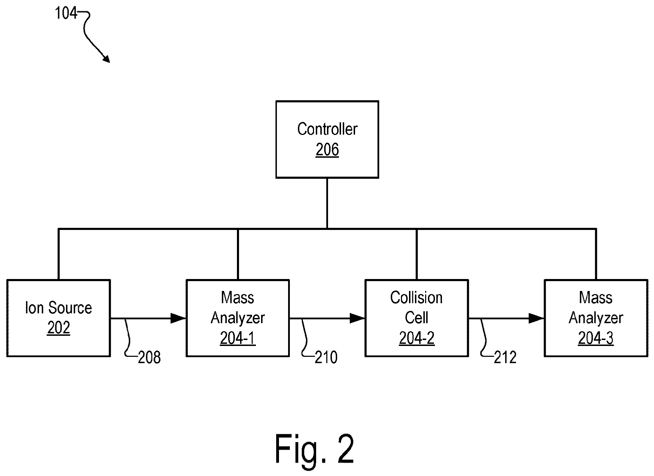

FIG. 2 shows a functional diagram of an illustrative implementation of mass spectrometer 104. As shown, mass spectrometer 104 includes an ion source 202, a first mass analyzer 204-1, a collision cell 204-2, a second mass analyzer 204-3, and a controller 206. Mass spectrometer 104 may further include any additional or alternative components not shown as may suit a particular implementation (e.g., ion optics, filters, ion stores, an autosampler, a detector, etc.).

Ion source 202 is configured to produce a stream 208 of ions from the separated components in sample 108 and deliver the ions to first mass analyzer 204-1. Ion source 202 may use any suitable ionization technique, including without limitation electron ionization, chemical ionization, matrix assisted laser desorption/ionization, electrospray ionization, atmospheric pressure chemical ionization, atmospheric pressure photoionization, inductively coupled plasma, and the like. Ion source 202 may include various components for producing ions from components included in sample 108 and delivering the ions to first mass analyzer 204-1.

First mass analyzer 204-1 is configured to receive ion stream 208, isolate precursor ions of a selected m/z range (a precursor m/z range) and deliver a beam 210 of precursor ions to collision cell 204-2. Collision cell 204-2 is configured to receive beam 210 of precursor ions and produce product ions (e.g., fragment ions) via controlled dissociation processes. Collision cell 204-2 is further configured to direct a beam 212 of product ions to second mass analyzer 204-3. Second mass analyzer 204-3 is configured to filter and/or perform a mass analysis of the product ions.

Mass analyzers 204-1 and 204-3 are configured to isolate or separate ions according to m/z of each of the ions. Mass analyzers 204-1 and 204-3 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap mass analyzer, a Kingdon trap, etc.), a Fourier transform ion cyclotron resonance (FT-ICR) mass analyzer, and the like. Mass analyzers 204-1 and 204-3 need not be implemented by the same type of mass analyzer.

Collision cell 204-2 may be implemented by any suitable collision cell. As used herein, "collision cell" may encompass any structure or device configured to produce product ions via controlled dissociation processes and is not limited to devices employed for collisionally-activated dissociation. For example, collision cell 204-2 may be configured to fragment precursor ions using collision induced dissociation, electron transfer dissociation, electron capture dissociation, photo induced dissociation, surface induced dissociation, ion/molecule reactions, and the like.

An ion detector (not shown) is configured to detect ions at each of a variety of different m/z and responsively generate an electrical signal representative of ion intensity. The electrical signal is transmitted to controller 206 for processing, such as to construct a mass spectrum of the sample. For example, mass analyzer 204-3 may emit an emission beam of separated ions to the ion detector, which is configured to detect the ions in the emission beam and generate or provide data that can be used by controller 206 to construct a mass spectrum of the sample. The ion detector may be implemented by any suitable detection device, including without limitation an electron multiplier, a Faraday cup, and the like. In other examples, such as where second mass analyzer 204-3 is implemented by an orbital electrostatic trap mass analyzer, second mass analyzer 204-3 functions as both a mass analyzer and a detector.

Controller 206 may be communicatively coupled with, and configured to control operations of, mass spectrometer 104. For example, controller 206 may be configured to control operation of various hardware components included in ion source 202 and/or mass analyzers 204-1 and 204-3. To illustrate, controller 206 may be configured to control an accumulation time of ion source 202 and/or mass analyzers 204, control an oscillatory voltage power supply and/or a DC power supply to supply an RF voltage and/or a DC voltage to mass analyzers 204, adjust values of the RF voltage and DC voltage to select an effective m/z (including a mass tolerance window) for analysis, and adjust the sensitivity of the ion detector (e.g., by adjusting the detector gain).

Controller 206 may include any suitable hardware (e.g., a processor, circuitry, etc.) and/or software as may serve a particular implementation. While FIG. 2 shows that controller 206 is included in mass spectrometer 104, controller 206 may alternatively be implemented in whole or in part separately from mass spectrometer 104, such as by a computing device communicatively coupled to mass spectrometer 104 by way of a wired connection (e.g., a cable) and/or a network (e.g., a local area network, a wireless network (e.g., Wi-Fi), a wide area network, the Internet, a cellular data network, etc.). In some examples, controller 206 may be implemented in whole or in part by controller 106.

In the example of FIG. 2, mass spectrometer 104 is tandem-in-space (e.g., has multiple mass analyzers) and has two stages for performing tandem mass spectrometry. However, mass spectrometer 104 is not limited to this configuration but may have any other suitable configuration. For example, mass spectrometer 104 may be tandem-in-time. Additionally or alternatively, mass spectrometer 104 may be a multi-stage mass spectrometer and may have any suitable number of mass analyzers and stages (e.g., three or more) for performing multi-stage mass spectrometry (e.g., MS/MS/MS).

Referring again to FIG. 1, controller 106 is communicatively coupled with, and configured to control operations of, LC-MS system 100 (e.g., liquid chromatograph 102 and mass spectrometer 104). Controller 106 may include any suitable hardware (e.g., a processor, circuitry, etc.) and/or software configured to control operations of and/or interface with the various components of LC-MS system 100 (e.g., liquid chromatograph 102 or mass spectrometer 104).

Controller 106 and/or controller 206 may also include and/or provide a user interface configured to enable user interaction with LC-MS system 100 or mass spectrometer 104. The user may interact with controller 106 and/or controller 206 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 106 and/or controller 206. In other examples, the display device and/or input device may be separate from, but communicatively coupled to, controller 106 and/or controller 206. For instance, the display device and the input device may be included in a computer (e.g., a desktop computer, a laptop computer, etc.) communicatively connected to controller 106 and/or controller 206 by way of a wired connection (e.g., by one or more cables) and/or a wireless connection.

Controller 106 acquires data acquired over time by LC-MS system 100. The data may include a series of mass spectra including intensity values of ions produced from the analytes included in sample 108 as a function of m/z of the ions. The series of mass spectra may be represented in a three-dimensional map in which elution time (e.g., retention time) is plotted along an X-axis of the map, m/z is plotted along a Y-axis of the map, and intensity is plotted along a Z-axis of the map. Spectral features on the map (e.g., Z-axis peaks of intensity) represent detection by LC-MS system 100 of ions produced from various analytes included in sample 108. The X-axis and Z-axis of the map may be used to generate an elution profile (e.g., a mass chromatogram) that plots detected intensity as a function of time for a selected m/z.

As used herein, a "selected m/z" refers to a specific m/z, with or without a mass tolerance window (e.g., +/- 0.5 m/z), or a narrow range of m/z (e.g., an isolation window with a width or range such as 20 m/z, 10 m/z, 4 m/z, 3 m/z, etc.). In a targeted MS2 or MSn analysis, such as a selected reaction monitoring (SRM) analysis, a multiple reaction monitoring (MRM) analysis, or a parallel reaction monitoring (PRM) analysis, the selected m/z corresponds to the m/z of the product ion of a distinct transition (precursor ion/product ion pair), and the recorded intensity as a function of time vector (e.g., trace) represents the elution profile for the distinct transition. The Y-axis and Z-axis of the map may be used to generate mass spectra, each mass spectrum plotting intensity as a function of m/z for a particular acquisition.

As mentioned, targeted mass spectrometry experiments are designed to gather quantitative information about a set of target analytes, the identity of which are known before the experiment starts. The quantity of a target analyte may be determined by integrating the area under its elution peak. In some examples, quantitation of the target analyte includes summing the detected signal for multiple different selected m/z for product ions that are characteristic of the target analyte of interest and integrating the area under the summed signal. For example, a target analyte of interest may have multiple characteristic transitions, each of which may be summed to form an elution profile with an increased signal to noise ratio. Thus, as used herein, "selected m/z" may also be a combination of multiple distinct m/z or m/z ranges. For example, the selected m/z for a target analyte of interest may be the combination of multiple distinct m/z or m/z ranges for each ion characteristic of the target analyte of interest, and the elution profile for the selected m/z may be the summed signal of each distinct m/z or m/z range. In further examples, the multiple distinct m/z or m/z ranges span the full m/z spectrum, wherein the elution profile is a total ion current (TIC).

As used herein, an "acquisition" refers to a mass analysis performed at a discrete point in time to acquire a single mass spectrum across an m/z range of interest (e.g., a selected m/z). It will be recognized that, in some targeted MS2 analyses, true "spectra" are not acquired in that the detected intensity as a function of time is acquired or recorded for only a selected m/z and not for a broad m/z spectrum. Nevertheless, for ease of discussion herein, the recorded intensity vs. time vector for such targeted MS2 analyses is referred to herein as a mass spectrum.

As used herein, "acquisition window" refers to a segment of time during which a mass analysis is performed for a selected precursor m/z (one or more active target analytes) to acquire a set of mass spectra for the selected m/z. The acquisition window is preferably positioned across the elution peak for the selected precursor m/z so that a plurality of acquisitions are acquired for the selected precursor m/z. Typically, the sampling rate for the plurality of acquisitions is set to satisfy a sampling rate requirement for the characteristic elution peak width of the selected precursor m/z. The width of the acquisition window ("acquisition window width") is ideally equal to the elution peak width for the selected m/z, but in some examples the acquisition window width is larger than the elution peak width for the selected m/z, such as by a factor of 2, 3, or 4, to capture data both before and after the elution peak. In other experiments, such as when multiplexing a sample and determining quantitative information based on ratios of peaks in the spectrum, the acquisition window is configured to acquire only a single mass spectrum at or near the apex of peaks.

In targeted experiments, a mass analysis is performed for a fixed, known list of analytes included in a sample. Given some knowledge about the analytes' expected elution times from the separation system, an acquisition schedule is created that specifies which analytes the mass spectrometer will target for mass analysis at which time during the experiment (referred to as "target analytes"). For chromatographic separation applications, an analyte's elution time refers to retention time, which is generally measured as the period of time between injection of the sample into the mobile phase and the relative intensity peak maximum after chromatographic separation. For capillary electrophoresis applications, in which analytes are not retained but instead continuously migrate, an analyte's elution time refers to migration time. Migration time is generally measured as the period of time taken for an analyte to migrate from the beginning of the capillary to a detection location. For ion mobility separations, an analyte's elution time refers to drift time of the analyte through a buffer gas, which may take place either in-space (e.g. a drift tube) or in-time (e.g. a trapped ion mobility cell).

Narrower scheduled acquisition windows are more efficient, allowing for increased dwell time or injection time per target analyte, yielding higher precision measurements and lower limits of detection. Narrower scheduled acquisition windows may also be used to increase the number of targets in an assay, which increases coverage and experiment capacity (e.g., a higher targeted multiplexing) and can make the experiment more useful.

Due to time-dependent variations in the separation system properties, such as solvent composition and stationary phase condition in LC separation systems, elution times can be variable and shift during the run from the expected elution time. The phenomenon of changing elution times is referred to as elution time drift (or elution time shift). Due to elution time drift, narrow acquisition windows can be risky, especially with certain experimental setups, such as nano flow LC, hydrophilic interaction liquid chromatography (HILIC) columns, and capillary electrophoresis. In these cases, the experimenter wishing to use narrow scheduled acquisition windows is forced to either continuously monitor the experiment to update the target elution times or risk missing measurements in runs with elution time shifts larger than half the acquisition window size.

Various techniques have been developed to address elution time drift and adjust the acquisition schedule in real-time during an experiment, which techniques are referred to as elution time drift correction. Some techniques involve the measurement of reference compounds and the real-time update of the target scheduling windows. For example, a set of standard compounds with reference elution times may be spiked into the sample. Observation of the standards at a new elution time allows the scheduled acquisition windows to be updated to account for any elution time drift. Another technique associates target analytes with specific, high-intensity analytes or standards. Observation of a standard activates the acquisition window of the associated targets. Another technique, referred to as the elution time order technique, determines a ranked elution order of all target analytes. Observation of a specific target analyte activates the acquisition window of target analytes nearby in the ranking. In another technique, referred to as SureQuant (developed by Thermo Fisher Scientific (Waltham, MA)), a set of heavy-labeled standards are spiked into a sample. When a specific heavy standard is detected in an MS querying mode, the mass spectrometer acquires data for heavy and endogenous target analytes in a quantitative mode. Another technique, also developed by Thermo Fisher Scientific, estimates elution time drift and updates targeted acquisition windows based on a cross-correlation of real-time mass spectra data with reference mass spectra data without regard for analyte identity.

All of these techniques can be effective under certain circumstances, but all but the SureQuant technique only make generalized estimates of the elution time drift. The SureQuant method enables very narrow scheduled acquisition windows but requires a heavy-labeled standard for every peptide of interest, which can be expensive and reduces the instrument duty cycle by requiring twice as many acquisitions. The generalized elution time drift estimates of the remaining techniques make the scheduled acquisition windows larger than they would otherwise have to be because elution order is not necessarily maintained as a column ages and individual compounds shift more or less than their neighbors. The larger widths of the scheduled acquisition windows limit the number of analytes that can be targeted in an assay and thus do not enable a higher experiment capacity that might be achieved with narrower acquisition windows.

To address these problems, systems and methods described herein predict elution times of analytes. These predicted elution times may account for elution time drift, as well as allow for setting narrower targeted acquisition windows than is currently possible with conventional techniques. The predicted elution times may be determined based on measured or otherwise known elution times of a first set of analytes. Based on the elution times of the first set of analytes and on metadata associated with a second set of analytes, elution times of the second set of analytes may be predicted, so that a narrow acquisition window may be set for each target analyte. The narrow acquisition windows increase the number of analytes that can be targeted in the assay, which increases coverage and experiment capacity (higher targeted multiplexing). Examples of methods of such predictions are described herein.

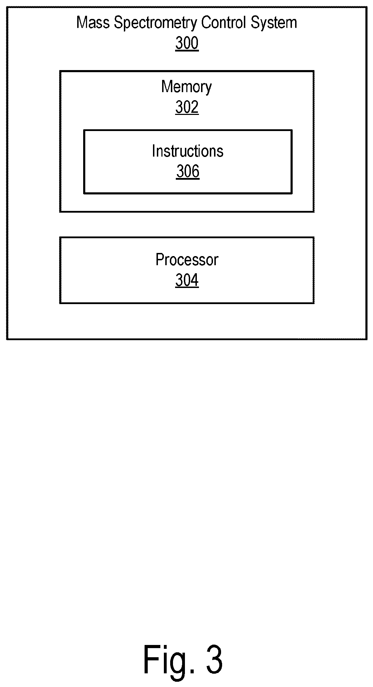

A mass spectrometry control system may be used to predict elution times of components included in a sample for a targeted analysis by LC-MS system 100. The mass spectrometry control system may control and/or perform one or more operations associated with predicting elution times. FIG. 3 shows a functional diagram of an illustrative mass spectrometry control system 300 ("system 300"). System 300 may be implemented entirely or in part by LC-MS system 100 (e.g., by controller 106 and/or controller 206). Alternatively, system 300 may be implemented separately from LC-MS system 100 (e.g., a remote computing system or server separate from but communicatively coupled to controller 106 and/or controller 206).

System 300 may include, without limitation, a memory 302 and a processor 304 selectively and communicatively coupled to one another. Memory 302 and processor 304 may each include or be implemented by hardware and/or software components (e.g., processors, memories, communication interfaces, instructions stored in memory for execution by the processors, etc.). In some examples, memory 302 and processor 304 may be distributed between multiple devices and/or multiple locations as may serve a particular implementation.

Memory 302 may maintain (e.g., store) executable data used by processor 304 to perform any of the operations described herein. For example, memory 302 may store instructions 306 that may be executed by processor 304 to perform any of the operations described herein. Instructions 306 may be implemented by any suitable application, software, code, and/or other executable data instance.

Memory 302 may also maintain any data acquired, received, generated, managed, used, and/or transmitted by processor 304. For example, memory 302 may maintain LC-MS data (e.g., acquired chromatogram data and/or mass spectra data).

Processor 304 may be configured to perform (e.g., execute instructions 306 stored in memory 302 to perform) various processing operations described herein. It will be recognized that the operations and examples described herein are merely illustrative of the many different types of operations that may be performed by processor 304. In the description herein, any references to operations performed by system 300 may be understood to be performed by processor 304 of system 300. Furthermore, in the description herein, any operations performed by system 300 may be understood to include system 300 directing or instructing another system or device to perform the operations.

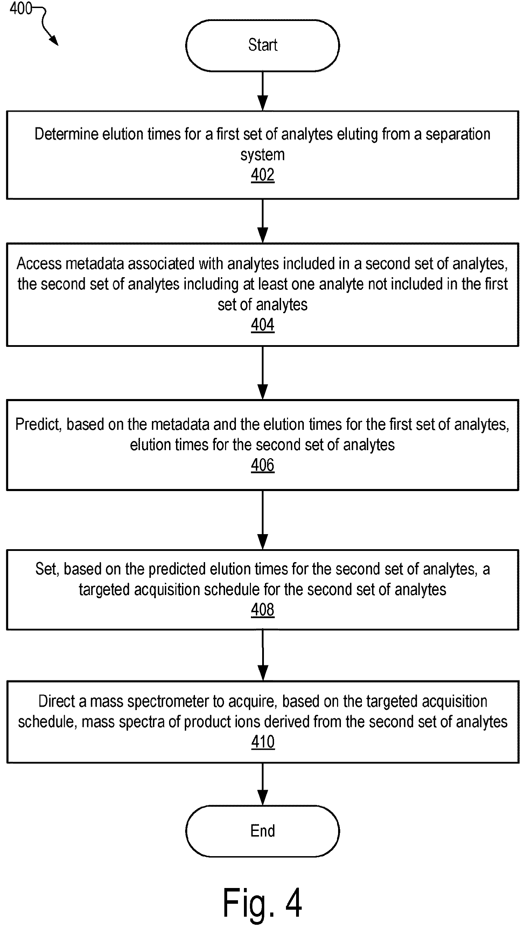

FIG. 4 shows an illustrative method 400 of predicting elution times for targeted mass spectrometry. While FIG. 4 shows illustrative operations according to one embodiment, other embodiments may omit, add to, reorder, and/or modify any of the operations shown in FIG. 4.

At operation 402, system 300 determines elution times for a first set of analytes eluting from a separation system (e.g., from liquid chromatograph 102 or any other suitable separation system). The first set of analytes is a different set of analytes than a second, target set of analytes that are the analytes of interest to analyze in a sample. The first set of analytes may be any suitable set of analytes, such as a set of standard analytes, a subset of the second set of analytes (e.g., a subset of analytes included in the sample of interest to be analyzed), etc. The first set of analytes may include analytes that are similar to analytes of interest in the second set of analytes. For example, the first set of analytes may include analytes that are of a same type as analytes in the second set of analytes. For instance, the first set of analytes may include a threshold number of a same or similar type of a peptide as peptides of interest in the second set of analytes (e.g., unmodified peptides, post-translationally modified peptides, etc.). To illustrate, if the targeted experiment will acquire data for phosphopeptides, the training experiment may use a number (e.g., at least 4, 5, 8, 10, 12, 15, or more) of phosphopeptides to predict the elution time for any phosphopeptide.

System 300 may determine the elution times for the first set of analytes in any suitable manner. For example, system 300 may perform a training experiment on a training sample that includes the first set of analytes. The training experiment may be any suitable experiment, such as a data independent acquisition (DIA) experiment, a data dependent acquisition (DDA) experiment, a MS-only experiment, or one or more targeted experiments with wide scheduled acquisition windows. The data generated by the training experiment may be used to determine elution times for the analytes in the training sample. The training sample may be any suitable sample, such as a standards sample (e.g., a HeLa protein digest standard), a set of multiple different peptides, a plasma sample, or even the sample of interest.

Based on the training experiment, system 300 may determine up-to-date elution time information for the analytes included in the first set of analytes. The elution time data obtained by performing the training experiment may be used to update the elution times for the first set of analytes. Thus, the training experiment determines updated elution times that account for any elution time drift. While the expected elution time for some analytes included in the first set of analytes may be known and updated, the measured elution time information may also be useful as some elution times for particular analytes in the first set of analytes may be unknown. Further, elution times of analytes may vary depending on experiment conditions, such as operating parameters of LC-MS system 100 (e.g., flow rate, temperature, pressure, etc.) and/or environmental (e.g., ambient) conditions (such as temperature, pressure, etc.). In some examples, the training experiment may be performed under experiment conditions that are the same as or similar to the experiment conditions for analysis of the second set of analytes (e.g., for analysis of the sample of interest). For instance, the training experiment may be performed on a same LC column immediately prior to further target experiments on a sample of interest including the second set of analytes. Additionally or alternatively, the training experiment may be performed periodically and/or may be triggered by events, such as when an LC column has been changed, an experiment condition has changed more than a threshold level, a threshold amount of time has passed since a previous training experiment, or any other such events that may result in a change in elution times of analytes.

At operation 404, system 300 accesses metadata associated with analytes included in a second set of analytes. The second set of analytes includes at least one analyte not included in the first set of analytes. As mentioned, the second, target set of analytes may be a different set of analytes than the first, training set of analytes. Thus, the second set includes at least one analyte not included in the first set of analytes. As the second set includes at least one analyte not included in the first set of analytes, the second set may be an entirely different set of analytes than the first set of analytes or may include some or all of the analytes in the first set of analytes.

At operation 406, system 300 predicts, based on the metadata associated with the analytes in the second set of analytes and the elution times for the first set of analytes, elution times for the second set of analytes. In some examples, such predictions may be for a subset of the second set of analytes. For instance, for analytes that are included in both the first set and the second set, the elution times may be already determined and may not need further prediction or correction.

System 300 may predict the elution times in any suitable manner. For instance, system 300 may generate, train, or update a predictive model configured to predict elution times of analytes based on metadata of the analytes and/or elution times of other analytes. The predictive model may be any suitable machine learning model, such as a neural network based model or other deep learning model. System 300 may train the predictive model based on metadata associated with the first set of analytes (e.g., which may include metadata analogous to the metadata associated with the second set of analytes) and the elution times of the first set of analytes. Training of the predictive model is based on the principle that the elution time of an analyte is a function of at least one or more physical, chemical, and/or other characteristics of the analyte, which characteristics are represented by the metadata for the analyte. Accordingly, system 300 may train the predictive model by applying metadata associated with each analyte in the first set of analytes as input values to the predictive model and the measured elution time of each analyte in the first set of analytes as a known desired output value from the predictive model. The training data (e.g., metadata and elution times for analytes in the first set of analytes) may be split into two sets of data such that a first set of training data may be used for training the predictive model and a second set of training data may be used to score the predictive model. One or more model parameters of the predictive model may be adjusted based on the score. As explained further below, training of the predictive model may also be based on the principle that the elution time of an analyte is also a function of various experimental conditions. Accordingly, one or more other experimental condition values representing the experimental conditions for the training experiment may also be applied as inputs when training the predictive model. However, where the training experiment is performed on the same apparatus and under the same experimental conditions as the targeted experiment on the sample of interest, such as when the training experiment is performed just prior to performing the targeted experiment, the predictive model may be trained without accounting for experiment conditions.

System 300 may then apply the metadata associated with the second set of analytes to the trained predictive model to predict the elution times of the second set of analytes. Additionally or alternatively, system 300 may update a previously trained predictive model by applying the metadata associated with the second set of analytes and the measured elution times of the first set of analytes (as measured during the training experiment) to the previously trained predictive model to generate predictions for the elution times for the second set of analytes.

The elution times for the analytes (both measured in the first set of analytes and predicted in the second set of analytes) may include any associated attributes that may define the elution times, such as a width of an acquisition window for elution of the analyte, a start time, a stop time, a peak time associated with a peak apex for the analyte, peak widths, etc.

In some examples, the one or more analytes included in the second set that are not included in the first set may include analytes that may have been present in the training experiment sample but not detected during the training experiment. For instance, the training sample used in the training experiment may include a small amount of a particular analyte. Because of the low concentration of the particular analyte, the particular analyte may not be detected during the training experiment (and thus is not an analyte included in the first set of analytes for which system 300 determines elution times). However, the particular analyte may also be included in the second set of analytes (in the sample to be analyzed in a targeted experiment). By predicting the elution time of the particular analyte, system 300 may be able to schedule an acquisition window for the particular analyte to detect the particular analyte in the target experiment, even at small quantities. For example, the predicted elution time may allow for a longer injection time or other additional measures for improving detectability for the particular analyte during the target experiment than in the training experiment.

Additionally or alternatively, the one or more analytes in the second set that are not included in the first set may include analytes that are different than but similar (e.g., chemically and/or physically) to one or more analytes of the first set. Additionally or alternatively, the one or more analytes in the second set not included in the first set may include any other analytes of interest.

System 300 may predict the elution times of the second set of analytes based on the metadata associated with the analytes in the second set of analytes, along with corresponding metadata associated with the analytes in the first set of analytes. The metadata associated with the analytes included in the second set may include any suitable metadata associated with the analytes and that correlates with or influences in some way the elution time of the analytes, such as a type of analyte, m/z, charge state, collision energies, optimized collision energies, collisional cross-sections, field asymmetric ion mobility spectrometry (FAIMS) compensation voltages (CV), mass spectral information, a peptide sequence for peptides, or any other property (e.g., chemical or physical) associated with the analyte that may be correlated to the elution time. Such metadata associated with the analytes included in the second set may be determined based on a prior discovery, characterization, or validation experiment on the second set of analytes and/or analytes in the second set that are not included in the first set. Additionally or alternatively, some of the metadata for analytes of the second set may be predicted or estimated based on corresponding metadata for analytes of the first set.

At operation 408, system 300 sets, based on the predicted elution times for the second set of analytes, a targeted acquisition schedule for the second set of analytes. The targeted acquisition schedule may include, for each analyte in the second set of analytes, a selected m/z and a predicted elution time (which may include a scheduled acquisition window size). The targeted acquisition schedule may further include any other parameters for measuring each analyte of the second set of analytes during the target experiment, for example the most abundant charge state of the analyte may be predicted, so that the acquisition scheduled may include the appropriate selected precursor m/z. As the targeted acquisition schedule is based on the predicted elution times, the acquisition window sizes may be set narrowly for each analyte, with minimal buffer.

As mentioned, in some examples the acquisition window for each target is ideally set to approximately the same width as the peak width for the target, while in other examples the acquisition window width has a buffer to capture data before and after the elution peak, such as to account for elution time drift. In some examples, system 300 may vary an amount of buffer for an acquisition window for an analyte based on a certainty level of a predicted elution time. For instance, for a particular analyte in the second set and that is not included in the first set, the first set may include a plurality of similar analytes in the first set or an analyte in the first set that is very similar to the particular analyte. For such a prediction based on a very similar analyte or a plurality of relatively similar analytes, system 300 may have a relatively high level of certainty. Based on the high level of certainty (e.g., above a threshold certainty level), system 300 may schedule a very narrow acquisition window for the particular analyte. In contrast, for a different analyte in the second set that is not included in the first set, there may not be a very similar analyte included in the first set. For such an analyte, a predicted elution time may have a low certainty. Accordingly, system 300 may set a wider scheduled acquisition window for such an analyte. System 300 may correlate the width of the scheduled acquisition windows with the predicted elution time certainty in any suitable manner, such as a dynamic range of buffer times to add to a predicted elution time, a predetermined set of amounts of buffer times that may be selected based on a prediction certainty ranges, etc.

The certainty level may be determined in any suitable manner. For example, the certainty level may be included as an inherent output of the machine learning model. Additionally or alternatively, the uncertainty may be estimated and/or modeled using various techniques, such as by learning a probability distribution over weights of variables, rather than deterministic weights. The variance of this distribution may provide a measure of certainty or uncertainty.

At operation 410, system 300 directs mass spectrometer 104 to acquire, based on the targeted acquisition schedule, mass spectra of product ions derived from the second set of analytes. Mass spectrometer 104 may acquire the mass spectra in any suitable manner as described herein.

As mass spectrometer 104 acquires the mass spectra, system 300 may gather information, such as elution time information and analyte information, in real time and further update the predicted elution times, the targeted acquisition schedule, and/or the trained machine learning model configured to predict the elution times.

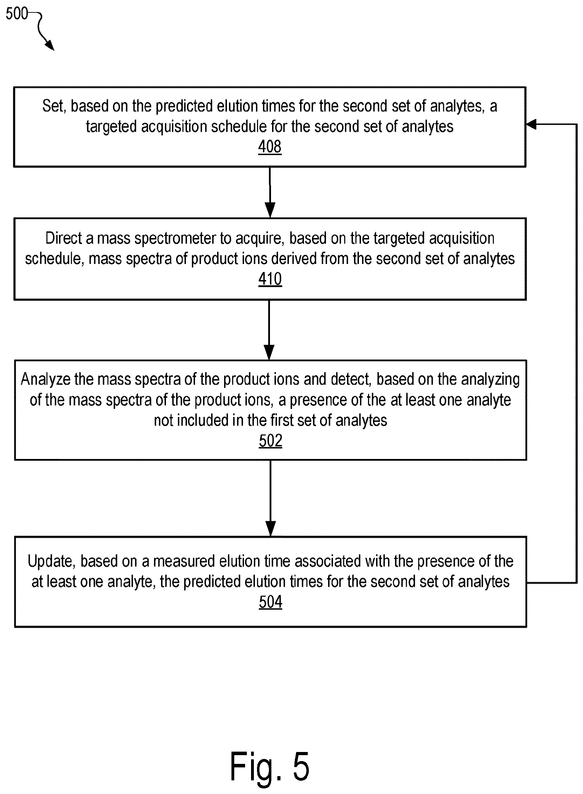

For example, FIG. 5 shows another illustrative method 500 of predicting elution times for targeted mass spectrometry. While FIG. 5 shows illustrative operations according to one embodiment, other embodiments may omit, add to, reorder, and/or modify any of the operations shown in FIG. 5.

Method 500 includes operation 408 of method 400, wherein system 300 sets, based on the predicted elution times for the second set of analytes, a targeted acquisition schedule for the second set of analytes. Method 500 further includes operation 410 of method 400, wherein system 300 directs a mass spectrometer to acquire, based on the targeted acquisition schedule, mass spectra of product ions derived from the second set of analytes.

At operation 502, system 300 analyzes the mass spectra of the product ions and detects, based on the analysis of the mass spectra acquired at operation 410, a presence of at least one analyte in the second set of analytes that is not included in the first set of analytes. System 300 may detect the presence of the at least one analyte based on the analysis in any suitable manner. For example, system 300 may determine a likelihood that a signal acquired at a predicted elution time for a target analyte corresponds to the target analyte. For instance, system 300 may compute a target score for the target analyte and compare the target score to a null hypothesis score generated based on a decoy analyte that may be similar in composition to the target analyte but is not included in the compound and/or does not exist in nature.

At operation 504, system 300 updates, based on a measured elution time associated with the presence of the at least one analyte, the predicted elution times for the second set of analytes. For instance, a measured elution time of a particular target analyte that is detected as present in the sample may be used to directly update and/or confirm a predicted elution time for the target analyte for subsequent target experiment runs. In some examples, if the predicted elution time included buffer times for the scheduled acquisition window, such buffer times may be decreased or removed to update the scheduled target acquisition window.

Further, the measured elution time may be used to update other predicted elution times. For instance, the measured elution time may be provided to the trained machine learning model as another input that the model may use to update predicted elution times (and the targeted acquisition schedule) for the remaining analytes of the second set of analytes in the current target experiment. Additionally or alternatively, the measured elution time may be provided as additional training data to further train the machine learning model.

Additionally or alternatively, the measured elution times from the targeted experiment may be used to update the predicted elution times to account for elution time drift as the chromatographic column ages. This elution time drift can cause issues with narrowly scheduled target acquisition windows, as the elution times may drift outside of the acquisition windows as the elution times shift, resulting in incorrect or incomplete mass spectra. As elution time for each analyte may change differently from the elution time shift of other analytes, the machine learning model may learn and predict elution time drift for each analyte, which may further be correlated to metadata associated with the analytes.

Based on these updated predicted elution times, system 300 may perform operation 408, setting another targeted acquisition schedule for a subsequent target experiment (or a remaining targeted acquisition schedule for a current target experiment). This process may be repeated as desired throughout some or all of a series of target experiment runs on a same chromatographic column.

In some examples, system 300 also includes experiment conditions as an additional input to the machine learning model. For example, system 300 may input conditions such as room temperature, column temperature, atmospheric pressure, back pressure of the column, age of the column, and/or any other conditions that may affect elution times of analytes. Such inputs may provide additional data for the machine learning model to predict elution times and/or elution time shifts. Such inputs may be provided for training and/or application of the model to predict elution times.

In some examples, the measured elution times for the second set of analytes, as measured at operation 410, may be used to predict elution times for a third set of analytes that includes at least one analyte not included in the second set of analytes. For instance, the second set of analytes may be a subset of a larger target set of analytes (which may be the third set of analytes or for which the third set may also be a subset). System 300 may determine that predicted elution times for some of the analytes of the larger set of analytes may be too uncertain (e.g., below a first threshold certainty level) based on the elution times of the first set of analytes, while other predicted elution times for other analytes may be relatively certain (e.g., above a second threshold certainty level, above the first threshold certainty level, etc.). System 300 may include the analytes for which the predicted elution times are relatively certain in the second set of analytes and measure elution times for the second set in a first training experiment run. System 300 may use the measured elution times for the second set of analytes as additional data for predicting additional analytes in the larger set of analytes. System 300 may include analytes for which predicted elution times are relatively certain based on the measured elution times for the second set of analytes (and the first set of analytes) in the third set of analytes. System 300 may thus iteratively predict elution times for more and more analytes in the larger set of analytes.

In some examples, the predicted and/or measured elution times may further be used by system 300 for analyzing and/or processing spectra for determining an abundance of target analytes. For instance, integration start and stop boundaries may be determined based on the predicted elution time in real time or after a target experiment and stored (e.g., in a .raw file or other ancillary file) for post-processing algorithms to use. The post-processing algorithm may then integrate the observed signal based on the predicted elution time (e.g., over an acquisition window that is based on the predicted elution time) for a target analyte to determine abundance of the target analyte. This may remove computational burden from the post-processing algorithms from having to determine the start and stop boundaries for each target analyte.

Additionally or alternatively, the abundance of target analytes may be estimated in real time or after the target experiment by integrating extracted ion chromatograms of appropriate transitions across the integration boundaries, wherein the integration boundaries are set based on the predicted elution times for the target analytes. In some examples, the abundance of target analytes may be expressed as a ratio of spectral intensities in a same spectrum, such as in the case of multiplexing using isobaric mass tags, such as Tandem Mass Tag^{®} (TMT^{®}) reagents (produced by Electrophoretics Limited and available from Thermo Fisher Scientific, Waltham, MA). In some examples, the abundance of target analytes may be expressed as a ratio of integrated peak areas of target analytes compared to reference analytes, such as in the case of absolute quantitation with internal heavy-labeled standards. In these examples, the integration boundaries are determined based on the predicted elution times for the target analytes.

Additionally or alternatively, the predicted elution times may be used for determining abundance of target analytes that may be below a conventional threshold for analysis. For instance, an observed signal may not indicate a peak or otherwise be high enough to trigger a post-processing analysis of the observed signal at an expected elution time for a target analyte. Nevertheless, system 300 may integrate the observed signal based on the predicted elution time for the target analyte to determine any quantities of the target analyte. If none are detected, knowing the predicted elution times allow for confirmation of an absence of the target analyte in the sample.

In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

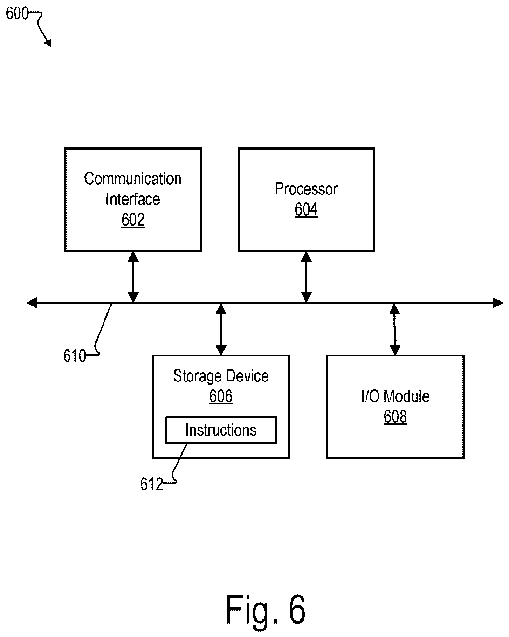

FIG. 6 shows an illustrative computing device 600 that may be specifically configured to perform one or more of the processes described herein. As shown in FIG. 6, computing device 600 may include a communication interface 602, a processor 604, a storage device 606, and an input/output ("I/O") module 608 communicatively connected one to another via a communication infrastructure 610. While an illustrative computing device 600 is shown in FIG. 6, the components illustrated in FIG. 6 are not intended to be limiting. Additional or alternative components may be used in other embodiments. Components of computing device 600 shown in FIG. 6 will now be described in additional detail.

Communication interface 602 may be configured to communicate with one or more computing devices. Examples of communication interface 602 include, without limitation, a wired network interface (such as a network interface card), a wireless network interface (such as a wireless network interface card), a modem, an audio/video connection, and any other suitable interface.

Processor 604 generally represents any type or form of processing unit capable of processing data and/or interpreting, executing, and/or directing execution of one or more of the instructions, processes, and/or operations described herein. Processor 604 may perform operations by executing computer-executable instructions 612 (e.g., an application, software, code, and/or other executable data instance) stored in storage device 606.

Storage device 606 may include one or more data storage media, devices, or configurations and may employ any type, form, and combination of data storage media and/or device. For example, storage device 606 may include, but is not limited to, any combination of the non-volatile media and/or volatile media described herein. Electronic data, including data described herein, may be temporarily and/or permanently stored in storage device 606. For example, data representative of computer-executable instructions 612 configured to direct processor 604 to perform any of the operations described herein may be stored within storage device 606. In some examples, data may be arranged in one or more databases residing within storage device 606.

I/O module 608 may include one or more I/O modules configured to receive user input and provide user output. One or more I/O modules may be used to receive input for a single virtual experience. I/O module 608 may include any hardware, firmware, software, or combination thereof supportive of input and output capabilities. For example, I/O module 608 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 608 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 608 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 600. For example, memory 302 may be implemented by storage device 606, and processor 304 may be implemented by processor 604.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Advantages and features of the present disclosure can be further described by the following examples:
1. A non-transitory computer-readable medium storing instructions that, when executed, cause a processor of a computing device to perform a process comprising: determining elution times for a first set of analytes eluting from a separation system; accessing metadata associated with analytes included in a second set of analytes, the second set of analytes including at least one analyte not included in the first set of analytes; predicting, based on the metadata associated with the analytes included in the second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.
2. The computer-readable medium of any of the preceding statements, wherein the metadata comprises at least one of a type of analyte, a mass-to-charge ratio, a collision energy, a collisional cross-section, a peptide sequence for peptides, or a mass spectral parameter associated with the second set of analytes.
3. The computer-readable medium of any of the preceding statements, wherein the predicting the elution times for the second set of analytes comprises applying the elution times for the first set of analytes and the metadata to a trained machine learning model configured to predict the elution times.
4. The computer-readable medium of any of the preceding statements, wherein the predicting the elution times for the second set of analytes comprises: training, based on the elution times for the first set of analytes and metadata associated with the first set of analytes, a machine learning model to predict the elution times; and applying the metadata associated with the second set of analytes to the machine learning model to predict the elution times.
5. The computer-readable medium of any of the preceding statements, wherein the determining the elution times for the first set of analytes comprises directing the mass spectrometer to acquire mass spectra of product ions derived from the first set of analytes eluting from the separation system.
6. The computer-readable medium of any of the preceding statements, further comprising: analyzing the mass spectra of the product ions; and detecting, based on the analyzing of the mass spectra of the product ions, a likelihood of a signal associated with the at least one analyte not included in the first set of analytes.
7. The computer-readable medium of any of the preceding statements, wherein the analyzing the mass spectra of the product ions comprises: computing a target score of a mass spectrum included in the mass spectra of the product ions, the mass spectrum acquired at a predicted elution time associated with the at least one analyte not included in the first set; and comparing the target score to a null hypothesis score based on a decoy analyte.
8. The computer-readable medium of any of the preceding statements, further comprising updating, based on a measured elution time associated with the likelihood of the signal associated with the at least one analyte, the targeted acquisition schedule.
9. The computer-readable medium of any of the preceding statements, further comprising updating, based on a measured elution time associated with the likelihood of the signal associated with the at least one analyte, a machine learning model configured to predict the elution times.
10. The computer-readable medium of any of the preceding statements, wherein the predicting the elution times is further based on an experiment condition of the mass spectrometer.
11. A system for performing mass spectrometry, comprising: a memory storing instructions; and a processor communicatively coupled to the memory and configured to execute the instructions to perform a process comprising: determining elution times for a first set of analytes eluting from a separation system; accessing metadata associated with analytes included in a second set of analytes, the second set of analytes including at least one analyte not included in the first set of analytes; predicting, based on the metadata associated with analytes included in a second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.
12. The system of any of the preceding statements, wherein the metadata comprises at least one of a type of analyte, a mass-to-charge ratio, a collision energy, a collisional cross-section, a peptide sequence for peptides, or a mass spectral parameter associated with the second set of analytes.
13. The system of any of the preceding statements, wherein the predicting the elution times for the second set of analytes comprises applying the elution times for the first set of analytes and the metadata to a trained machine learning model configured to predict the elution times.
14. The system of any of the preceding statements, wherein the predicting the elution times for the second set of analytes comprises: training, based on the elution times for the first set of analytes and metadata associated with the first set of analytes, a machine learning model to predict the elution times; and applying the metadata associated with the second set of analytes to the machine learning model to predict the elution times.
15. The system of any of the preceding statements, wherein the determining the elution times for the first set of analytes comprises directing the mass spectrometer to acquire mass spectra of product ions derived from the first set of analytes eluting from the separation system.
16. The system of any of the preceding statements, wherein the process further comprises: analyzing the mass spectra of the product ions; and detecting, based on the analyzing of the mass spectra of the product ions, a likelihood of a signal associated with the at least one analyte not included in the first set of analytes.
17. The system of any of the preceding statements, wherein the analyzing the mass spectra of the product ions comprises: computing a target score of a mass spectrum included in the mass spectra of the product ions, the mass spectrum acquired at a predicted elution time associated with the at least one analyte not included in the first set; and comparing the target score to a null hypothesis score based on a decoy analyte.
18. The system of any of the preceding statements, wherein the process further comprises updating, based on a measured elution time associated with the likelihood of the signal associated with the at least one analyte, the targeted acquisition schedule.
19. The system of any of the preceding statements, wherein the predicting the elution times is further based on an experiment condition of the mass spectrometer.
20. A system for performing mass spectrometry, comprising: a mass analyzer configured to acquire, over time, a series of mass spectra of detected ions derived from components eluting from a separation system; and a computing device configured to perform a process comprising: determining elution times for a first set of analytes eluting from a separation system; accessing metadata associated with analytes included in a second set of analytes, the second set of analytes including at least one analyte not included in the first set of analytes; predicting, based on the metadata associated with analytes included in a second set of analytes and the elution times for the first set of analytes, elution times for the second set of analytes; setting, based on the predicted elution times for the second set of analytes, a targeted acquisition schedule for the second set of analytes; and directing a mass spectrometer to acquire, based on the targeted acquisition schedule, mass spectra of product ions derived from the second set of analytes.

## Claims

1. A non-transitory computer-readable medium storing instructions that, when executed, cause a processor of a computing device to perform a process comprising:
determining elution times for a first set of analytes eluting from a separation system;
accessing metadata associated with analytes included in a second set of analytes, the second set of analytes including at least one analyte not included in the first set of analytes;
predicting, based on the metadata associated with the analytes included in the second set of analytes and the elution times for the first set of analytes, elution times for the second set of analytes;
setting, based on the predicted elution times for the second set of analytes, a targeted acquisition schedule for the second set of analytes; and
directing a mass spectrometer to acquire, based on the targeted acquisition schedule, mass spectra of product ions derived from the second set of analytes.

2. The computer-readable medium of claim 1, wherein the metadata comprises at least one of a type of analyte, a mass-to-charge ratio, a collision energy, a collisional cross-section, a peptide sequence for peptides, or a mass spectral parameter associated with the second set of analytes.

3. The computer-readable medium of either claim 1 or claim 2, wherein the predicting the elution times for the second set of analytes comprises applying the elution times for the first set of analytes and the metadata to a trained machine learning model configured to predict the elution times.

4. The computer-readable medium of either claim 1 or claim 2, wherein the predicting the elution times for the second set of analytes comprises:
training, based on the elution times for the first set of analytes and metadata associated with the first set of analytes, a machine learning model to predict the elution times; and
applying the metadata associated with the second set of analytes to the machine learning model to predict the elution times.

5. The computer-readable medium of any previous claim, further comprising:
analyzing the mass spectra of the product ions; and
detecting, based on the analyzing of the mass spectra of the product ions, a likelihood of a signal associated with the at least one analyte not included in the first set of analytes.

6. The computer-readable medium of claim 5, wherein the analyzing the mass spectra of the product ions comprises:
computing a target score of a mass spectrum included in the mass spectra of the product ions, the mass spectrum acquired at a predicted elution time associated with the at least one analyte not included in the first set; and
comparing the target score to a null hypothesis score based on a decoy analyte.

7. The computer-readable medium of claim 5, further comprising updating, based on a measured elution time associated with the likelihood of the signal associated with the at least one analyte, either the targeted acquisition schedule or a machine learning model configured to predict the elution times.

8. The computer-readable medium of any previous claim, wherein the predicting the elution times is further based on an experiment condition of the mass spectrometer.

9. A system for performing mass spectrometry, comprising:
a memory storing instructions; and
a processor communicatively coupled to the memory and configured to execute the instructions to perform a process comprising:
determining elution times for a first set of analytes eluting from a separation system;
accessing metadata associated with analytes included in a second set of analytes, the second set of analytes including at least one analyte not included in the first set of analytes;
predicting, based on the metadata associated with analytes included in a second set of analytes and the elution times for the first set of analytes, elution times for the second set of analytes;
setting, based on the predicted elution times for the second set of analytes, a targeted acquisition schedule for the second set of analytes; and
directing a mass spectrometer to acquire, based on the targeted acquisition schedule, mass spectra of product ions derived from the second set of analytes.

10. The system of claim 9, wherein the metadata comprises at least one of a type of analyte, a mass-to-charge ratio, a collision energy, a collisional cross-section, a peptide sequence for peptides, or a mass spectral parameter associated with the second set of analytes.

11. The system of either claim 9 or claim 10, wherein the predicting the elution times for the second set of analytes comprises applying the elution times for the first set of analytes and the metadata to a trained machine learning model configured to predict the elution times.

12. The system of either claim 9 or claim 10, wherein the predicting the elution times for the second set of analytes comprises:
training, based on the elution times for the first set of analytes and metadata associated with the first set of analytes, a machine learning model to predict the elution times; and
applying the metadata associated with the second set of analytes to the machine learning model to predict the elution times.

13. The system of any one of claims 9-12, wherein the process further comprises:
analyzing the mass spectra of the product ions; and
detecting, based on the analyzing of the mass spectra of the product ions, a likelihood of a signal associated with the at least one analyte not included in the first set of analytes.

14. The system of claim 13, wherein the analyzing the mass spectra of the product ions comprises:
computing a target score of a mass spectrum included in the mass spectra of the product ions, the mass spectrum acquired at a predicted elution time associated with the at least one analyte not included in the first set; and
comparing the target score to a null hypothesis score based on a decoy analyte.

15. The system of claim 13, wherein the process further comprises updating, based on a measured elution time associated with the likelihood of the signal associated with the at least one analyte, the targeted acquisition schedule.

16. The system of any one of claims 9-15, wherein the predicting the elution times is further based on an experiment condition of the mass spectrometer.
